(19) Europäisches Patentamt
European Patent Office
Office européen des brevets

(11) Veröffentlichungsnummer: **0 068 225**
**B1**

# (12) EUROPÄISCHE PATENTSCHRIFT

(45) Veröffentlichungstag der Patentschrift: **27.11.85**

(51) Int. Cl.⁴: **C 08 F 20/34**, D 21 H 3/38, C 02 F 1/54

(21) Anmeldenummer: **82105110.9**

(22) Anmeldetag: **11.06.82**

(54) **Verwendung von wasserlöslichen Polymerisaten von Di-C1- bis C3-alkylaminoneopentyl-(meth)acrylaten, als Retentions-, Entwässerungs-und Flockungsmittel.**

(30) Priorität: **19.06.81 DE 3124011**
**05.09.81 DE 3135279**

(43) Veröffentlichungstag der Anmeldung: **05.01.83 Patentblatt 83/1**

(45) Bekanntmachung des Hinweises auf die Patenterteilung: **27.11.85 Patentblatt 85/48**

(84) Benannte Vertragsstaaten: **AT BE CH DE FR GB IT LI NL SE**

(56) Entgegenhaltungen:
**DE - A - 1 935 476**
**DE - A - 2 934 086**

(73) Patentinhaber: **BASF Aktiengesellschaft, Carl-Bosch-Strasse 38, D-6700 Ludwigshafen (DE)**

(72) Erfinder: **Linhart, Friedrich, Dr., Richard-Kuhn-Strasse 37, D-6900 Heidelberg (DE)**
Erfinder: **Hartmann, Jürgen, Dr., Brüsseler Ring 47, D-6700 Ludwigshafen (DE)**
Erfinder: **Jung, Dietmar, Dr., Leuschnerstrasse 30, D-6700 Ludwigshafen (DE)**
Erfinder: **Hartmann, Heinrich, Dr., Weinheimer Strasse 46, D-6703 Limburgerhof (DE)**
Erfinder: **Spoor, Herbert, Dr., Woogstrasse 44, D-6703 Limburgerhof (DE)**
Erfinder: **Burkert, Hans, Dr., Sudermannstrasse 6, D-6700 Ludwigshafen (DE)**
Erfinder: **Heide, Wilfried, Dr., Laerchenweg 4, D-6701 Erpolzheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Aus der DE-PS 2432699 ist ein Verfahren zur Herstellung von sedimentationsstabilen Wasser-in-Öl-Dispersionen von Acrylamidpolymerisaten bekannt, bei dem man eine Wasser-in-Öl-Emulsion einer wässrigen Acrylamidlösung, die gegebenenfalls bis zu 50 Gew.-% andere wasserlösliche, ethylenisch ungesättigte Monomeren enthält, in einem hydrophoben organischen Dispersionsmedium in Gegenwart eines Wasser-in-Öl-Emulgiermittels, 0,1 bis 10 Gew.-% eines Netzmittels, dessen HLB-Wert über 10 beträgt, und eines Polymerisationsinitiators polymerisiert. Als andere wasserlösliche, ethylenisch ungesättigte Monomere kommen auch Ester von Aminoalkoholen der Acrylsäure oder Methacrylsäure in Betracht. Die bekannten Copolymerisate werden unter anderem auch bei der Papierherstellung zur Erhöhung der Retention, Entwässerungsgeschwindigkeit und Flockungsgeschwindigkeit verwendet. Die mit diesen Copolymerisaten erzielbaren Wirkungen sind jedoch noch verbesserungsbedürftig.

Aus der DE-OS 2934086 sind Emulsionspolymerisate bekannt, die (a) 5 bis 100 Gew.-% eines Dialkylaminoneopentylesters einer ethylenisch ungesättigten polymerisierbaren Carbonsäure und (b) 0 bis 95 Gew.-% eines in Wasser höchstens begrenzt löslichen Comonomeren enthalten, wobei die Summe (a) und (b) wenigstens 90 Gew.-% des Polymerisates bilden und der restliche Teil des Copolymerisates aus wasserlöslichen Comonomeren aufgebaut sein kann. Diese Emulsionspolymerisate liegen in Form einer wässrigen Dispersion vor und werden als Verdickungsmittel für wässrige Systeme verwendet, deren pH-Wert unter 7 liegt.

Sofern bisher wasserlösliche Dialkylaminoalkyl(meth)acrylat-gruppen enthaltende Polymerisate als Flockungsmittel verwendet werden, so nimmt die Wirksamkeit dieser Produkte ziemlich rasch ab, wenn sie in Form einer wässrigen Lösung vorliegen. Nach längerer Lagerung sind diese Produkte praktisch unwirksame Flockungsmittel.

Aufgabe der Erfindung ist es daher, wasserlösliche Polymerisate zur Verfügung zu stellen, die bei der Anwendung als Papierhilfsmittel eine verbesserte Retention, Entwässerungsgeschwindigkeit und Flockungswirkung ergeben als die bekannten Copolymerisate des Acrylamids und die gleichzeitig wirksame Flockungsmittel für Abwässer und Schlämme sind.

Die Aufgabe wird erfindungsgemäss gelöst durch Verwendung von wasserlöslichen Homopolymerisaten von neutralisierten oder quaternisierten Di-$C_1$- bis $C_3$-alkylaminoneopentyl(meth)acrylaten und Copolymerisaten, die mindestens 5 Gew.-% Di-$C_1$- bis $C_3$-alkylaminoneopentyl(meth)acrylat in neutralisierter oder quaternisierter Form einpolymerisiert enthalten und einen K-Wert von 150 bis 300 haben, als Retentions-, Entwässerungs- und Flockungsmittel bei der Herstellung von Papier und als Flockungsmittel für Schlämme aus kommunalen Kläranlagen und für Belebtschlämmen industrieller Abwasserreinigungsanlagen.

Die Homo- und Copolymerisate können nach bekannten Verfahren durch Polymerisieren der Monomeren hergestellt werden, z. B. durch Polymerisieren in einer Wasser-in-Öl-Emulsion gemäss dem aus der DE-PS 1089173 bekannten Verfahren oder nach dem Verfahren der umgekehrten Suspensionspolymerisation gemäss der DE-PS 1081228 sowie durch Lösungspolymerisation in Wasser als auch durch Fällungspolymerisation in inerten organischen Lösungsmitteln. Bei allen Verfahren verwendet man die dafür üblichen Polymerisationsinitiatoren, z. B. Peroxide, Redoxkatalysatoren oder Azo-bis-isobutyronitril. Für die Herstellung von Homopolymerisaten polymerisiert man neutralisierte oder quaternisierte Di-$C_1$- bis $C_3$-alkylaminoneopentyl(meth)acrylate [Monomere der Gruppe (a)] in Abwesenheit von anderen Monomeren. Copolymerisate von Di-$C_1$- bis $C_3$-alkylaminoneopentylacrylaten bzw. von Di-$C_1$- bis $C_3$-alkylaminoneopentylacrylaten enthalten mindestens 5 Gew.-% dieser Monomeren einpolymerisiert. Vorzugsweise werden Copolymerisate hergestellt, die 20 bis 80 Gew.-% Di-$C_1$- bis $C_3$-alkylaminoneopentylacrylat oder Di-$C_1$- bis $C_3$-alkylaminoneopentylmethacrylat einpolymerisiert enthalten. $C_1$- bis $C_3$-alkylgruppen sind Methyl-, Ethyl-, n-Propyl- und Isopropylgruppen.

Als Comonomere der Gruppe (b) kommen vorzugsweise Acrylamid, Methacrylamid und Ester von Aminoalkoholen der Acrylsäure und Methacrylsäure, z. B. Dimethylaminoethylacrylat, Diethylaminoethylacrylat, Dimethylaminoethylmethacrylat, Diethylaminopropylacrylat, Diethylaminopropylmethacrylat und Dimethylaminobutylacrylat, in Betracht. Sowohl die Ester der Aminoalkohole der Acrylsäure bzw. Methacrylsäure als auch die Di-$C_1$- bis $C_3$-alkylaminoneopentyl(meth)acrylate werden dabei immer in neutralisierter oder quaternisierter Form der Polymerisation unterworfen. Geeignete Quaternisierungsmittel sind beispielsweise Alkylhalogenide, wie Methylchlorid, Ethylchlorid, Methylbromid, Ethylbromid, Methyljodid, Propylchlorid und Butylchlorid, Dimethylsulfat, Diethylsulfat, Laurylchlorid, Alkylenoxide, wie Ethylenoxid und Propylenoxid, Hydroxyalkylhalogenide, Epihalogenhydrine, z. B. Epichlorhydrin und Epibromhydrin sowie Benzylchlorid.

Zur Neutralisation eignen sich anorganische und organische Säuren, die Salze mit den basischen Monomeren bilden, z. B. Schwefelsäure, Salzsäure, Phosphorsäure, Essigsäure, Ameisensäure und Adipinsäure.

Weitere Comonomere der Gruppe (b) sind ethylenisch ungesättigte Carbonsäuren mit 3 bis 5 Kohlenstoffatomen, wie Acrylsäure, Methacrylsäure, Crotonsäure, Itakonsäure, Fumarsäure und Maleinsäureanhydrid sowie saure Monomeren, wie Alkali- oder Ammoniumsalze von Vinylbenzylsulfonaten, Acrylamidopropansulfonsäure und Vinylsulfonsäure.

Zur Modifizierung können die Copolymerisate Monomere der Gruppe (c) bis zu etwa 20 Gew.-%

einpolymerisiert enthalten, wobei die Summe der Gewichtsprozente (a), (b) und (c) immer 100 beträgt. Monomere dieser Gruppen sind Acrylsäure- und Methacrylsäureester von einwertigen 1 bis 12 Kohlenstoffatomen enthaltenden Alkoholen, Acrylnitril, Methacrylnitril, Vinylester, z. B. Vinylacetat, Vinylpropionat und Vinylbutyrat, Diisobutylen und Styrol.

Besondere Bedeutung für den Einsatz in der Papierindustrie haben die Homopolymerisate von Dimethylaminoneopentylacrylat sowie Copolymerisate, die 20 bis 80 Gew.-% Dimethylaminoneopentylacrylat und 80 bis 20 Gew.-% Acrylamid, Methacrylamid, Dialkylaminoalkylester von Acrylsäure bzw. Methacrylsäure einpolymerisiert enthalten. Acrylamid und Methacrylamid können in den Copolymerisaten ganz oder teilweise durch die genannten basischen Acrylate, z. B. Diethylaminoethylacrylat, ersetzt sein.

Als Flockungsmittel für Abwässer und Schlämme werden bevorzugte Copolymerisate verwendet, die 20 bis 95 Gew.-% Di-$C_1$- bis $C_3$-Alkylaminoneopentylacrylat in neutralisierter und quaternisierter Form und als Comonomere 5 bis 80 Gew.-% Amide ethylenisch ungesättigter $C_3$- bis $C_5$-Carbonsäuren, Di-$C_1$- bis $C_3$-Alkylamino-$C_2$ bis $C_4$-Alkylester der Acrylsäure oder Methacrylsäure und/oder Di-$C_1$ bis $C_3$-Alkylamino-$C_2$ bis $C_4$-Alkylen-(meth)acrylamide einpolymerisiert enthalten. Comonomere dieser Art sind beispielsweise Acrylamid, Methacrylamid und Ester von Aminoalkoholen der Acrylsäure und Methacrylsäure, z. B. Dimethylaminoethylacrylat, Diethylaminoethylacrylat, Dimethylaminoethylmethacrylat, Diethylaminoethylmethacrylat, Diethylaminopropylacrylat, Diethylaminopropylmethacrylat und Dimethylaminobutylacrylat. Beispiele für Dialkylaminoalkylen(meth)acrylamide sind Verbindungen der Formel

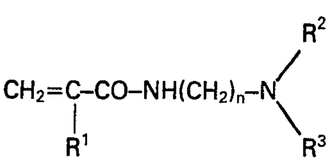 ,

in der $R^1$ = H, $CH_3$
$R^2$, $R^3$ = $C_1$- bis $C_3$-Alkylgruppe und
n = 2 bis 4.

Verbindungen dieser Art sind beispielsweise N,N-Dimethylaminopropylacrylamid, N,N-Dimethylaminopropylmethacrylamid und N,N-Diethylaminobutylacrylamid.

Die Polymerisationstemperatur ist abhängig von dem jeweils verwendeten Polymerisationsinitiator. Sie kann in einem weiten Bereich schwanken, beispielsweise zwischen 0 und 120°C liegen. In der Regel polymerisiert man bei Normaldruck und Temperaturen von 20 bis 80°C, wobei man für eine gute Durchmischung der Komponenten sorgt. Die Monomeren werden praktisch vollständig polymerisiert. Im Anschluss an die Hauptpolymerisation kann sich eine Nachpolymerisation anschliessen, um den Restmonomerengehalt des Polymerisates möglichst weitgehend zu erniedrigen.

Die Molekulargewichte der Polymerisate betragen vorzugsweise mehr als 1 Million. Zur näheren Charakterisierung der Polymerisate dient der K-Wert nach Fikentscher. Die K-Werte betragen 150 bis 300 und liegen vorzugsweise in dem Bereich von 170 bis 250. Besonders die hochmolekularen Polymerisate eignen sich als Retentions-, Entwässerungs- und Flockungsmittel bei der Papierherstellung. Zu diesem Zweck setzt man dem Papierstoff, bezogen auf trockene Fasern, 0,005 bis 0,5, vorzugsweise 0,01 bis 0,1 Gew.-% eines der Di-$C_1$- bis $C_3$-alkylaminoneopentyl(meth)acrylat enthaltenden Copolymerisate zu. Die Di-$C_1$- bis $C_3$-aminoneopentyl(meth)acrylate entfalten ihre Wirksamkeit im schwach alkalischen, neutralen und sauren Stoff. Sie können sowohl bei holzfreien als auch holzhaltigen Stoffen eingesetzt werden. Sie sind besonders wirksam als Retentionsmittel für Kreide und Kaolin.

Die hochmolekularen wasserlöslichen Homo- und Copolymerisate werden auch als Flockungsmittel für Abwasser und Schlämme verwendet. Das Abwasser kann dabei aus kommunalen Kläranlagen oder Industriekläranlagen stammen. Die Homo- und Copolymerisate dienen in diesem Falle zum Klären der Abwässer. Sie können aber ebenso für die Flockung von Schlämmen aus kommunalen Kläranlagen und von Belebtschlämmen industrieller Abwasserreinigungsanlagen verwendet werden. Die Flockungsmittel werden in einer Menge von 100 bis 350 g pro $m^3$ Schlamm eingesetzt. Beim Klären von Abwässern verwendet man 1 bis 20 g Flockungsmittel pro $m^3$ Abwasser. Gegenüber den herkömmlichen kationischen Flockungsmitteln erzielt man mit den erfindungsgemäss zu verwendenden Homo- bzw. Copolymerisaten, die Di-$C_1$- bis $C_3$-Alkylaminoneopentyl(meth)acrylat in neutralisierter oder quaternisierter Form einpolymerisiert enthalten, eine Steigerung der Flockungswirkung, die sich darin äussert, dass man eine maximale Flockung bei geringerer Einsatzmenge des Flockungsmittels erzielt. Wässrige Lösungen von Dialkylaminoneopentyl(meth)acrylat enthaltenden Polymerisaten behalten im Gegensatz zu wässrigen Lösungen von bekannten kationischen Polymerisaten ihre Wirksamkeit als Flockungsmittel, d. h. die Stabilität der Wirksamkeit der wässrigen Polymerlösungen ist gut, so dass einmal bereitete Polymerlösungen nicht unmittelbar danach verbraucht werden müssen, sondern längere Zeit vor dem Einsatz als Flokkungsmittel gelagert werden können.

Die in den Beispielen angegebenen Teile sind Gewichtsteile, die Angaben in Prozent beziehen sich auf das Gewicht der Stoffe. Die K-Werte der Polymerisate wurden nach H. Fikentscher, Cellulose Chemie 13, 58 bis 64 und 71 bis 74 (1932) in 5%iger wässriger Kochsalzlösung bei einer Temperatur von 25°C gemessen; dabei bedeutet K = k . $10^3$.

Herstellung der Polymerisate.

I. Herstellung von Wasser-in-Öl-Polymer-Emulsionen

Allgemeine Vorschrift

In einem mit Rührer, Thermometer und einem Stickstoffeinlass und Stickstoffauslass versehenen Behälter mischt man folgende Komponenten:

220 Teile einer Mischung aus 84% gesättigten aliphatischen Kohlenwasserstoffen und 16% naphthenischen Kohlenwasserstoffen (Siedebereich 192 bis 254°C),

35 Teile des Umsetzungsproduktes aus 1 Mol Oleylglycidylether, 1 Mol Glycerin und 2 Mol Ethylenoxid und

6 Teile eines Additionsproduktes von 10 Mol Ethylenoxid an 1 Mol Nonylphenol.

In diese Mischung wird die wässrige Monomerphase eingerührt, deren jeweilige Zusammensetzung in Tabelle 1 angegeben ist. Man leitet 30 min Stickstoff durch die Emulsion und erhitzt sie dann innerhalb von 15 min auf 60°C. Bei dieser Temperatur setzt man eine Lösung von 0,15 Teilen 2,2'-Azo-bis-isobutyronitril in wenig Aceton zu. Die Temperatur der Reaktionsmischung wird 2 h in dem Bereich von 60 bis 65°C gehalten. Danach wird noch einmal die gleiche Menge des Polymerisationsinitiators zugesetzt und 2 h bei 65°C nachpolymerisiert. Man erhält eine koagulatfreie und sedimentationsstabile Wasser-in-Öl-Polymeremulsion.

Aus den so erhaltenen Wasser-in-Öl-Polymeremulsionen wurden wässrige Polymerisatlösungen nach dem in der US-PS 3624019 angegebenen Verfahren hergestellt, in dem man die Emulsionen mit 2% eines mit Ethylenoxid im Molverhältnis 10:1 umgesetzten Nonylphenyols versetzte und mit Wasser auf einen Polymergehalt von 0,25% verdünnte.

Tabelle 1

a) Monomerphase der W/O-Emulsionen

| | | 1 | 2 | 3 | 4 | 5 | 6 | 7 |
|---|---|---|---|---|---|---|---|---|
| Destilliertes Wasser | [g] | 369 | 369 | 369 | 369 | 369 | 369 | 369 |
| Acrylamid | [g] | 195 | 195 | 195 | 195 | 195 | 195 | 195 |
| 37,5%ige Schwefelsäure | [g] | 60 | 60 | 60 | 60 | 60 | 60 | 58 |
| Diethylaminoethylacrylat | [g] | 83 | 74,7 | 58,1 | 41,5 | 24,9 | 8,3 | – |
| Diethylaminoneopentylacrylat | [g] | – | 8,3 | 24,9 | 41,5 | 58,1 | 74,7 | 83 |
| Ameisensäre | [g] | 0,15 | 0,15 | 0,15 | 0,15 | 0,15 | 0,15 | 0,15 |

b) Zusammensetzung der Polymerisate in %

| | I/1 | I/2 | I/3 | I/4 | I/5 | I/6 | I/7 |
|---|---|---|---|---|---|---|---|
| Acrylamid | 70 | 70 | 70 | 70 | 70 | 70 | 70 |
| Diethylaminoethylacrylat | 30 | 27 | 21 | 15 | 9 | 3 | 0 |
| Dimethylamino-Neopentylacrylat⁺ | 0 | 3 | 9 | 15 | 21 | 27 | 30 |
| K-Wert | 197 | 247 | 201 | 217 | 221 | 235 | 216 |

Polymerisat I/1 = Vergleich gemäss Stand der Technik

⁺):
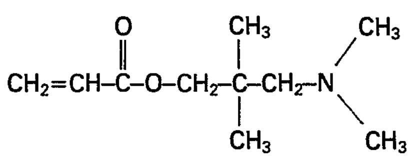

II. Pulverförmige Copolymerisate

Polymerisat II/1 ist ein handelsübliches pulverförmiges Copolymerisat aus 60% Acrylamid und 40% Diethylaminoethylacrylat-sulfat vom K-Wert 195.

Polymerisat II/2 wurde folgendermassen hergestellt:

114 g Dimethylamino-neo-pentylacrylatsulfat, 170 g Acrylamid und 1 g Ameisensäure in 280 g Wasser wurden mit Schwefelsäure auf pH 3 eingestellt und mit 0,57 g 2,2'-Azo-bis(N,N'-dimethylenisobutyramidin)dihydrochlorid versetzt. Die Lösung wurde bei 60°C während einer Stunde in eine Vorlage bestehend aus 1,6 l Cyclohexan und 5,5 g Schutzkolloid A gemäss der DE-OS 2710372 eingetragen. (Schutzkolloid A wurde durch Umsetzung von Dicyclopentadien, Maleinsäureanhydrid und Styrol im Autoklaven bei 267°C nach dem Entspannen und Abdestillieren der flüchtigen Anteile als Rückstand erhalten.) Nach einer weiteren Stunde bei 60°C und azeotroper Entfernung des Wassers erhielt man ein Polymerisat vom K-Wert 206 (0,1%ig in 5%iger wässriger Kochsalzlösung).

III. Herstellung von Wasser-in-Öl-Polymer-Emulsionen (Allgemeine Vorschrift)

In einem mit Rührer, Thermometer und einem Stickstoffein- und Stickstoffauslass versehenen Behälter mischt man die Komponenten der Ölphase, deren Zusammensetzung in Tab. 2 angegeben

ist. In diese Mischung wird die wässrige Monomerphase eingerührt (Zusammensetzung vgl. ebenfalls Tab. 2). Man leitet 30 min lang Stickstoff durch die Emulsion und erhitzt sie dann innerhalb von 15 min auf eine Temperatur von 60°C. Bei dieser Temperatur setzt man eine Lösung des Starters in wenig Aceton zu (Art und Menge, vgl. Tab. 2). Die Temperatur der Mischung wird 2 h in dem Bereich von 60 bis 65°C gehalten. Danach wird noch einmal die gleiche Menge des Polymerisationsinitiators zugesetzt und das Reaktionsgemisch 2 Stunden bei 65° C nachpolymerisiert. Man erhält eine koagulatfreie und sedimentationsstabile Wasser-in-Öl-Polymeremulsion.

Tabelle 2

Zusammensetzung der Wasser-in-Öl-Emulsionen für die Herstellung der Polymerisate

| | | III/1 | III/A | III/2 | III/B |
|---|---|---|---|---|---|
| Ölphase | | | | | |
| Kohlenwasserstoffgemisch (Siedebereich 192–254°C)[1] | [g] | 200 | 200 | 220 | 220 |
| Emulgator nach DE-OS 2557324[2] | [g] | 40 | 40 | 35 | 35 |
| Reaktionsprodukt aus 1 Mol Nonylphenol und 10 Mol Ethylenoxid | [g] | 7,5 | 7,5 | 6 | 6 |
| Monomerphase | | | | | |
| Destilliertes Wasser | [g] | 225 | 227 | 369 | 369 |
| Acrylamid | [g] | 40 | 40 | 190 | 195 |
| 37,5%ige Schwefelsäure | [g] | 203 | 205 | 61 | 60 |
| Diethylaminoethylacrylat | [g] | – | 280 | – | 83 |
| Dimethylaminoneopentylacrylat | [g] | 284 | – | 87 | – |
| Ameisensäure | [g] | – | – | 0,15 | 0,15 |
| 2,2'-Azo-bis-isobutyronitril | [g] | 2×0,2 | 2×0,2 | 2×0,15 | 2×0,15 |

[1] Mischung aus 84% gesättigten aliphatischen und 16% naphthenischen Kohlenwasserstoffen
[2] Umsetzungsprodukt aus 1 Mol Oleylglycidylether, 1 Mol Glycerin und 2 Mol Ethylenoxid

Tabelle 3

Charakterisierung der Polymerisate

| | | III/1 | III/A | III/2 | III/B |
|---|---|---|---|---|---|
| Polymergehalt der Emulsion | [%] | 40 | 40 | 30 | 30 |
| Zusammensetzung der Polymeren | | | | | |
| Acrylamid | [Gew.-%] | 10 | 10 | 63 | 65 |
| Diethylaminoethylacrylat | [Gew.-%] | – | 90 | – | 35 |
| Dimethylaminoneopentylacrylat | [Gew.-%] | 90 | – | 37 | – |
| K-Wert | 180 | 134 | 216 | 197 | |

Um die Wirksamkeit der oben beschriebenen Polymerisate zu prüfen, wurden aus den Wasser-in-Öl-Polymeremulsionen wässrige Polymerlösungen nach dem in der US-PS 3624019 angegebenem Verfahren hergestellt. Die Emulsionen wurden dazu in Wasser eingerührt, das, bezogen auf die Polymeremulsion, 2% eines mit 10 Mol Ethylenoxid umgesetzten Nonylphenols enthielt. Anschiessend wurde soviel Wasser zugefügt, dass der Polymergehalt 0,1% betrug. Diese 0,1%ige wässrigen Polymerlösungen wurden in den Beispielen 9 und 10 verwendet.

Verwendung der Polymerisate

Beispiel 1

Die Wirksamkeit des Polymerisates I/7 als Papierhilfsmittel wurde anhand der Mahlgradprüfung nach Schopper-Riegler und der Entwässerungszeit gegenüber dem Polymerisat I/1 gemäss Stand der Technik geprüft.

Bei der Mahlgradprüfung nach Schopper-Riegler verwendete man einen holzhaltigen und kaolinhaltigen Zeitungspapierstoff mit einem pH von 4,8 und einem Alaun-Gehalt von 1,5%. Die Stoffdichte betrug 0,2%, der Kaolingehalt ca. 12%. Die Entwässerungszeit wurde bestimmt, indem man die Zeit bestimmte, die 700 ml des oben beschriebenen Stoffs zum Passieren des Schopper-Riegler-Gerätes benötigten. Die Entwässerungszeit betrug bei dem hilfsmittelfreien Papierstoff 97 sek, der Mahlgrad 95°SR. Diese Bestimmungen wurden anschliessend anhand dieses Stoffmodells mit verschiedenen Zusatzmengen an Polymerisaten I/1 und I/7 durchgeführt. Die Einsatzmengen der Polymerisate und die dabei erhaltenen Ergebnisse sind in Tabelle 4 zusammengestellt.

Tabelle 4

| Dosierung % | Entwässerungszeit (s) 0,006 | 0,012 | 0,024 | Mahlgrad (°SR) 0,006 | 0,012 | 0,024 |
|---|---|---|---|---|---|---|
| Polymerisat I/1 | 72,4 | 63,4 | 55,0 | 51 | 47 | 44 |
| Polymerisat I/7 | 63,4 | 53,0 | 41,4 | 48 | 43 | 37 |

Beispiel 2

Mit Hilfe eines Rapid-Köthen-Blattbildners wurden aus einem neutralen Papierstoff aus 100 Teilen Sulfatzellstoff und 50 Teilen Kreide einer Stoffdichte von 0,2% Papierblätter mit einem Flächengewicht von etwa 70 g/m$^2$ hergestellt. Bei dem hilfsmittelfreien Papierstoff betrug der Kreidegehalt im Papier 3,2%. Der Kreidegehalt des Papiers wurde jeweils durch Veraschung der Papierblätter bestimmt. Die Wirksamkeit des Polymerisates I/7 als Retentionsmittel wurde mit derjenigen des bekannten Retentionsmittels-Polymerisat I/1 verglichen. Die Einsatzmengen der Polymerisate, bezogen auf trockenen Papierstoff sowie die erhaltenen Ergebnisse sind in Tabelle 5 zusammengestellt.

Tabelle 5

| Polymerisat | Kreidegehalt bei 0,012% | 0,024 Retentionsmittelzugabe bezogen auf trockenen Stoff |
|---|---|---|
| I/1 | 13,2% | 17,1% |
| I/7 | 18,4% | 21,1% |

Beispiel 3

Die Entwässerungsgeschwindigkeit von Polymerisaten, die in der Tabelle 1 angegeben sind, wurde an einem Stoffmodell mit Hilfe eines Schopper-Riegler-Gerätes geprüft. Als Stoffmodell diente holzhaltiger Zeitungspapierstoff, der einen pH-Wert von 4,8 hatte, 1,5% Alaun und ca. 12% Kaolin enthielt. Sofern man dem Stoff kein Hilfsmittel zusetzte, betrug die Entwässerungszeit 95,1 s. Die Entwässerungszeiten für die in Tabelle 1 beschriebenen Polymerisate bei unterschiedlichen Einsatzmengen, bezogen auf den trockenen Stoff, sind in Tabelle 6 angegeben.

Tabelle 6

| Polymerisat | Entwässerunszeit (s) bei 0,006% | 0,012% | 0,024% Polymerisatzusatz, bezogen auf trockenen Stoff |
|---|---|---|---|
| I/1 | 79,7 | 73,1 | 68,1 |
| I/2 | 70,7 | 64,0 | 55,9 |
| I/3 | 68,5 | 60,0 | 49,1 |
| I/4 | 64,1 | 52,7 | 44,2 |
| I/5 | 61,1 | 51,0 | 42,0 |
| I/6 | 62,4 | 52,0 | 43,0 |
| I/7 | 67,0 | 54,4 | 44,6 |

Beispiel 4

Auf einer Versuchspapiermaschine mit einer Siebbreite von 80 cm wurde bei einer konstanten Geschwindigkeit von 80 m/min aus einem holzfreien Stoff, der sich aus 60 Teilen Kiefersulfatzellstoff, 40 Teilen Birkensulfatzellstoff und 50 Teilen Kreide zusammensetzte, Papier mit einem Flächengewicht von ca. 85 g/m$^2$ ohne Verwendung eines Retentionsmittels hergestellt. Danach wurde die Wirkung der Polymerisate I/1 und I/7 geprüft. Die Ergebnisse sind in Tabelle 7 zusammengefasst.

Tabelle 7

| Polymer | Dosierung (g/h) | Flächengewicht (g/m$^2$) | Kreidegehalt (%) | Produktion (kg/h) | Polymer-Verbrauch (g/t) |
|---|---|---|---|---|---|
| – | | 86,4 | 9,4 | 307 | – |
| I/1 (Vergleich) | 75 | 95,7 | 21,5 | 367 | 204 |
| I/7 (gem. Erfindung) | 75 | 101,5 | 21,5 | 390 | 192 |
| Veränderung von I/1 gegenüber I/7 (%) | 0 | +6 | +16 | +6 | −6 |

Beispiel 5

Nach der im Beispiel 1 angegebenen Vorschrift für die Bestimmung der Entwässerungszeit wurde die entwässerungsbeschleunigende Wirkung der pulverförmigen Polymerisate II/1 (Vergleich) und II/2 (gemäss Erfindung) an einem holzhaltigen neutralen Zeitungspapierstoff gemessen. Die Stoffdichte betrug 0,2%. Ohne Verwendung eines Entwässerungshilfsmittels ermittelte man für dieses Stoffmodell eine Entwässerungszeit von 115 s. Bei Verwendung der in Tabelle 8 angegebenen Mengen der Polymerisate II/1 und II/7 wurden folgende Entwässerungszeiten gemessen:

Tabelle 8

| Polymer | Entwässerungszeit (s) bei 0,01% | 0,02% | 0,04% Polymerisatzusatz, bezogen auf trockenen Stoff |
|---|---|---|---|
| II/1 (Vergleich) | 83,6 | 70,3 | 54,5 |
| II/2 (gemäss Erfindung) | 78,3 | 57,9 | 42,3 |

Beispiel 6

Beispiel 5 wurde mit einem holzhaltigen Zeitungspapierstoff durchgeführt, dessen pH-Wert 4,5 betrug und der 1,5% Alaun enthielt. Die Stoffdichte betrug 0,2%. Ohne Verwendung eines Entwässerungshilfsmittels betrug die Entwässerungszeit 105,3 s. die Entwässerungszeiten für die Polymerisate II/1 und II/2 sind in Tabelle 9 angegeben.

Tabelle 9

| Polymer | Entwässerungszeit (s) bei 0,01% Polymerisatzusatz, bezogen auf trockenen Stoff | 0,02% | 0,04% |
|---|---|---|---|
| II/1 | 71,4 | 64,9 | 54,8 |
| II/2 | 56,5 | 47,1 | 36,3 |

Beispiel 7

Mit Hilfe eines Rapid-Köthen-Blattbildners werden von einem Papierstoff aus 80% gebleichtem Sulfitzellstoff und 20% Kaolin mit einem pH von 4,8 und einem Alaungehalt des Papierstoffs von 1,5% Blätter mit einem Flächengewicht von ca. 65 $g/m^2$ gebildet. Der Aschegehalt der Papierblätter betrug in Abwesenheit eines Retentionsmittels 5,3%. Bei Einstaz der Polymerisate II/1 gemäss Stand der Technik II/2 gemäss der Erfindung wurden die in Tabelle 10 angegebenen Aschegehalte gefunden.

Tabelle 10

| Polymer | Aschegehalt (%) bei einer Retentionsmittelzugabe (bezogen auf trockenen Stoff) von: 0,01% | 0,02% | 0,03% |
|---|---|---|---|
| II/1 | 9,8 | 11,7 | 12,9 |
| II/2 | 10,6 | 12,7 | 14,1 |

Beispiel 8

Um die Flockungswirkung der Polymerisate zu bestimmen, wurde ein feinstoffreicher Papierstoff, der in Liter 1 g Sulfitzellstoff und 0,25 g Kaolin enthielt mit unterschiedlichen Mengen an Polymerisaten II/1 und II/2 versetzt. Nach dem Umrühren und Absatzen der Suspension wurde jeweils die Durchsichtigkeit des überstehenden Klarwassers photometrisch bestimmt. Die Ergebnisse sind in der Tabelle zusammengefasst.

Tabelle 11

| pH-Wert | ca. 7 | | 6/0,5% Alaun | |
|---|---|---|---|---|
| Zusätze (ppm) | 0,25 | 0,5 | 0,125 | 0,25 |
| | | Durchsichtigkeit (%) | | |
| II/2 | 61 | 72 | 43 | 65 |
| II/2 | 75 | 80 | 64 | 80 |
| ohne Flockungsmittel | 20 | | 32 | |

Prüfmethoden

(a) Bestimmung der Flockungszahl

750 ml eines Abwassers bzw. eines Schlamms werden in einem 1-l-Messzylinder mit bestimmten Mengen einer 0,1%igen wässrigen Flockungsmittellösung versetzt. Die Flockung tritt praktisch augenblicklich ein. Der Inhalt des Messzylinders wird dann in einen Büchner-Trichter entleert und filtriert. Anhand des Filters wird die Flockung visuell beurteilt. Dabei bedeutet:

Flockungszahl 1 = kaum sichtbare Flockung
Flockungszahl 2 = geringe Flockung
Flockungszahl 3 = mittlere Flockung
Flockungszahl 4 = gute Flockung, für die Praxis meistens ausreichend
Flockungszahl 5 = sehr gute, optimale Flockung

b) Flockungswirksamkeit

Bei diesem Test wird – ebenfalls in einem 1-l-Messzylinder – die Flockungsmittelmenge ermittelt, die zu einem Abwasser bzw. Schlamm gegeben werden muss, um eine optimale Flockung (Flockungszahl = 5) zu erzielen.

Beispiel 9

An einem Faulschlamm aus einer kommunalen Kläranlage wurde die Flockungswirksamkeit für das Polymerisat III/1 und das Polymerisat III/A (Vergleich) nach der oben unter b) angegebenen Methode bestimmt. Für das Polymerisat III/1 betrug die optimale Menge für eine Flockung 250 mg/l Schlamm, während bei Einsatz des Polymerisats III/A 350 mg/l Schlamm verwendet werden mussten. Das Polymerisat III/1 ist demnach bedeutend wirksamer als das Polymerisat III/A gemäss Stand der Technik.

Beispiel 10

0,1%ige wässrige Lösungen des Polymerisates III/2 und des Polymerisates III/B wurden bis zu 24 h bei einer Temperatur von 23°C gelagert. Nach bestimmten, in Tabelle 12 angegebenen Zeiten wurde die Flockungszahl der wässrigen Polymerlösungen bestimmt. Die Ergebnisse sind in Tabelle 12 zusammengestellt. Die Flockungszahl wurde anhand eines Faulschlamms aus einer kommunalen Kläranlage ermittelt.

Tabelle 12

| | Flockungszahl nach 0 | 1 | 4 | 7 | 24 Stunden |
|---|---|---|---|---|---|
| 200 mg Polymer 2/1 | 5 | 5 | 5 | 5 | 4 |
| 250 mg Polymer B/1 | 5 | 5 | 4 | 3–4 | 2 |

Aus der Tabelle ist ersichtlich, dass die wässrige Lösung des erfindungsgemäss zu verwendenden Polymerisats III/2 wesentlich stabiler ist als die des bekannten Flockungsmittels Polymerisat III/B.

**Patentanspruch**

Verwendung von wasserlöslichen Homopolymerisaten von neutralisierten oder quaternisierten Di-$C_1$- bis $C_3$-alkyl-aminoneopentyl(meth)acrylaten und Copolymerisaten, die mindestens 5 Gew.-% Di-$C_1$- bis $C_3$-alkylaminoneopentyl(meth)-acrylat in neutralisierter oder quaternisierter Form einpolymerisiert enthalten und einen K-Wert von 150 bis 300 haben, als Retentions-, Entwässerungs- und Flockungsmittel bei der Herstellung von Papier und als Flockungsmittel für Schlämme aus kommunalen Kläranlagen und von Belebtschlämmen industrieller Abwasserreinigungsanlagen.

**Claim**

The use of water-soluble homopolymers of neutralized or quaternized di-$C_1$–$C_3$-alkylaminoneopentyl(meth)acrylates, and copolymers which contain at least 5% by weight of neutralized or quaternized di-$C_1$–$C_3$-alkylaminoneopentyl (meth)-acrylate as copolymerized units, the homopolymers and copolymers having a K value of from 150 to 300, as retention agents, drainage agents and flocculants in papermaking, and as flocculants for sludges from municipal sewage plants and for activated sludges from industrial waste water treatment plants.

**Revendication**

Utilisation d'homopolymérisats, solubles dans l'eau, de di-alkyl en $C_1$ à $C_3$-amino-néopentyl-(méth)acrylates neutralisés ou quaternisés, et de copolymérisats qui contiennent, en polymérisation, sous forme neutraliśee ou quaternisée, au moins 5% en poids de di-alkyl(en $C_1$ à $C_3$)-amino-néopentyl(méth)acrylate, comme agents de rétention, d'égouttage et floculants, pour la fabrication du papier et comme floculants pour dépôts provenant d'installations de purification communales et de dépôts activés d'installations industrielles d'épuration des eaux résiduaires.